# EUROPEAN PATENT APPLICATION

(11) **EP 4 840 294 A1**
(43) Date of publication of application: **18.11.2026**
(21) Application number: 25176842.0
(22) Date of filing: 15.05.2025
(51) Int. Cl.: A01G 13/06, A01M 7/00, A01C 23/04, A01G 17/00, A01G 17/02

(54) **STATIONARY SPRAYING SYSTEM FOR PROTECTION OF PERMANENT PLANTATIONS AND PROCEDURE OF OPERATION**

(71) Applicant: Kmetijski Institut Slovenije, 1000 Ljubljana (SI)
(72) Inventor: Stopar, Matej, 1000 Ljubljana (SI); Hillmayr, Nika, 1000 Ljubljana (SI); Cvelbar Weber, Nika, 1434 Loka pri Zidanem Mostu (SI)
(74) Representative: Macek, Gregor

(57) **Abstract**

The invention solves a problem of spraying permanent plantations using a solid-set sprinkler system (SSS), characterized in that each respective micro-sprinkler in the SSS is provided with a storage tank that enables a delivery of uniform amounts of a respective spraying agent or water in each micro-sprinkler connected to the SSS. Thus, uniform dosing of a spraying agent to each plant in a plantation row, for instance for each tree in an orchard row, is achieved with every spraying. The solid-set sprinkler system of the invention does not have return lines to the mixing storage tank of spraying agents, allowing the spraying agent to be completely used in each spraying without any remainders of the spraying agent remaining in the system.

## Description

### Field of invention

The present invention relates to the field of permanent plantation protection. The operation of a solid-set sprinkler system, hereinafter SSS, intended to apply pesticides to plants in permanent plantations, such as orchards, vineyards and the like, has been modified. An SSS is primarily intended for the application of pesticides to tree canopies in orchards. Micro-sprinklers arranged above each tree canopy in a row of a permanent plantation are connected to each other by polyethylene pipes into a system in all orchard rows and adapted to emit predetermined and adjusted doses of pesticides to protect plants against diseases and pests. An SSS replaces traditional and omnipresent spraying of orchards by tractors using air-blast sprayers. Compared to tractor spraying, an SSS allows for temporally precise and weather independent application of pesticides to tree canopies, reduces spray drift outside the orchard, prevents soil compaction due to numerous tractor drives, and reduces the exposure of workers to plant protection chemicals. A further advantage of an SSS is its multifunctionality. A solid-set sprinkler system emits water through micro-sprinklers, so it can be used for evaporative cooling of trees in early spring before vegetation, thus postponing or delaying tree blossoming to avoid frost. The system may also be used as a classic sprinkler system against frost; an anti-frost protective ice shield is formed in the tree blossoming period. In critical summer heat waves, water sprinkled to tree canopies may prevent sunburns of the exposed fruit. A solid-set sprinkler system may also be used to apply foliar fertilizers.

### Technical problem and available solutions so far

In the past years, permanent plantations have considerably changed, voluminous canopies have been replaced by a narrow fruit wall system, while the plant protection equipment has remained the same. To fight against diseases and pests, air-blast tractor sprayers are most often used in permanent plantations, which are adapted to voluminous canopies in the orchard or vineyard but fail to provide good coverage of the leaves with spraying agents and cause the pesticides to drift into the surrounding areas. Tractor sprayers often have the nozzles improperly set and have inadequate pressure, so the doses of spraying agents are normally not sufficient for the geometry of a tree/vine (Cross, 1991). As a result, a huge amount of the spraying agent gets lost when mobile sprayers are used, the agent does not reach the target area and does not meet the requirement for canopy coverage (Piementel, 1995). This results in the loss of the spraying agent which drifts to the atmosphere or the ground of the orchard/vineyard. Multiple tractor spraying of orchards/vineyards during the growth season - which is in fact necessary to protect the plantations - causes damage to the soil structure and is linked to a huge consumption of fossil fuel and labour force (Kozlowski, 1999). Tractor towed sprayers in permanent plantations also generate loud noise, the work is harmful to health. Due to terrain related and weather conditions, tractor spraying cannot always be foreseen to be executed at ideal times to protect against a certain disease or pest, while an SSS allows for a rapid, temporally more precise application of pesticides or fertilizers regardless of weather or terrain related conditions.

An SSS consisting of pipes and micro-sprinklers distributed throughout a plantation close to canopies may efficiently protect plants against diseases and pests in modern orchards/vineyards with small canopies as well as efficiently solve the above-mentioned environmental problems relating to pesticide application. Our preliminary results of using an SSS for spraying apple trees and the results of 15 years of research in the USA confirm that an SSS may equally efficiently be used to protect an orchard against diseases and pests as tractor spraying (Smith et al., 2019; Grieshop, 2014).

Many attempts have been made so far to make solid-set sprinkler or spraying systems intended for the application of pesticides, however, all of them focused primarily on the technical execution. An SSS installation system may use the existing wire cables of orchards having anti-hail fittings, which are installed above the canopies in the rows of permanent plantations. Such a system was initially tested by Lombard et al. (1966) who used high-flow irrigation system sprinklers. Carpenter et al. (1985) presented a basic design of an SSS system with micro-sprayers developed so far. The authors of the article came to a conclusion that a single solid-set sprinkler attached in the upper internal part of an apple tree canopy may serve to quite efficiently apply plant protection agents.

The technical solutions of the SSSs developed so far mostly relate to solid-set pipeline systems with micro-sprinklers above the canopies of permanent plantations, where water pumps and air compressors are used to propel a spraying agent. However, the presented patent solutions are not perfect. The major problems of the existing SSSs include: uneven dosage of a spraying agent over a plant, retention of spray agents in installations once spraying is completed, system cleaning and inefficient application of spraying agents into the interior of canopies. In this relation, we provide a table of the existing patent solutions to solid-set sprinkler systems:

### LIST OF PATENTS

| **Cited patent/ Number** | **Filing date** | **Publication date** | **Inventor/ applicant** | **Title of invention/patent** |
|---|---|---|---|---|
| CN106818690 (A) | 2016-11-11 | 2017-06-13 | Luo Guoping | Middle arranged automated fruit tree sprinkling irrigation system |
| CN104020706 (A) | 2014-06-23 | 2014-09-03 | Song Shuran et al. | Automatic ordered spraying system of orchard pipelines and control method of system |
| CN214708763 (U) | 2021-04-25 | 2021-11-16 | Jiang Tao, Yang Lan | Micro nozzle based on gas-liquid mixed spraying and spraying system |
| CN213819515 (U) | 2020-10-16 | 2021-07-30 | Zeng Wenming et al. | Automatic sequential spraying system for orchard pipeline |
| CN211831893(U) | 2020-03-25 | 2020-11-03 | Wang Pengfei et al. | Pipe network type fertilizer and pesticide supply system for hillside orchard |
| CN211826932(U) | 2019-10-09 | 2020-10-30 | Xiao Liping et al. | Multifunctional intelligent orchard sprinkling irrigation equipment |

### LIST OF NON-PATENT LITERATURE

Carpenter TG, Reichard DL in Wilson SM, 1985. Design and feasibility of a permanent pesticide application system for orchards. Trans ASAE 28, 350-355.
Cross, J.V., 1991. Patternation of spray mass flux from axial fan airblast sprayers in the orchard. BCPC Monogr Air-assisted Spraying Crop Prot. 46, 15-22.
Grieshop, M., Brunner, J., Agnello, A., 2014. SCRI - SSCDS year 2 summary report: www.canopydelivery.msu.edu/wp-content/uploads/2014/07/2013_SCRI-Report.pdf
Kozlowski TT, 1999. Soil compaction and growth of woodyplants. Scandinavian Journal of Forest Research 14 (6), 596 - 619.
Lombard PB, Westigard PH in Carpenter D, 1966. Overhead sprinkler system for environmental control and pesticide application in pear orchard. Hortscience 1: 95-96.
Pimentel, D., 1995. Amounts of pesticides reaching target pests: Environmental impacts and ethics. Journal of Agric. and Environ. Ethics 8 (1), 17 - 29.
Smith P, Perry R, Wise J, Jamil RZR, Gut L, Sundin G in Grieshop M, 2019. Spray coverage and pest management efficacy of a solid set canopy delivery system in high density orchard. Pest Manag Sci willeyonlinelibrary.com DOI 10.1002/ps.5421

Said technical problems are solved by a solid-set sprinkler system with hydraulic-pneumatic operation provided with a storage tank above each micro-sprinkler.

The invention solves a problem of spraying permanent plantations using a solid-set sprinkler system (SSS), characterized in that each respective micro-sprinkler in the SSS is provided with a storage tank that enables a delivery of uniform amounts of a respective spraying agent or water in each micro-sprinkler connected to the SSS. Thus, uniform dosing of a spraying agent to each plant in a plantation row, for instance for each tree in an orchard row, is achieved with every spraying. The solid-set sprinkler system of the invention does not have return lines to the mixing storage tank of spraying agents, allowing the spraying agent to be completely used in each spraying without any remainders of the spraying agent remaining in the system.

The sprinkler equipment is solid set in the plantation and can be used the whole year through for a variety of spraying applications to trees and permanent plantations. The agents to be applied by spraying are primarily plant protection agents and plant growth regulators (hereinafter both referred to as pesticides), water and foliar fertilizers. Installation of an SSS in orchards or vineyards allows for the protection against diseases and pests and for the application of other pesticides without using any traditional towed tractor sprayers, resulting in an environmentally friendlier maintenance of permanent plantations. Many tractor drives with towing sprayers during the whole growth period cause soil compaction, the tractors with sprayers are noisy, energy consuming and the used droplets cause the drift of spraying agents off the plantations. The use of an SSS is less weather dependent and allows for a temporally very precise application of pesticides. The micro-sprinklers in the SSS do not have huge air support as in tractor sprayers and therefore cause a lower drift of spraying agents in the environment. The installation of a solid-set sprinkler system is multifunctional. By emitting water droplets through the micro-sprinklers of the solid-set system, protection against spring time frosts may be provided in that glaze ice is formed around blossoms or, using evaporative cooling with water, tree blossoming in a plantation in pre-spring time is delayed, in summer time, fruit burns are prevented.

The SSS of the present invention differs from other systems in that it provides for a uniform application of spraying agents to each tree along a spraying line and enables complete emptying of the spraying agent from the system without using a return line to the mixing storage tank for the spraying agent.

The invention will be described in more detail hereinbelow and illustrated in the figures.

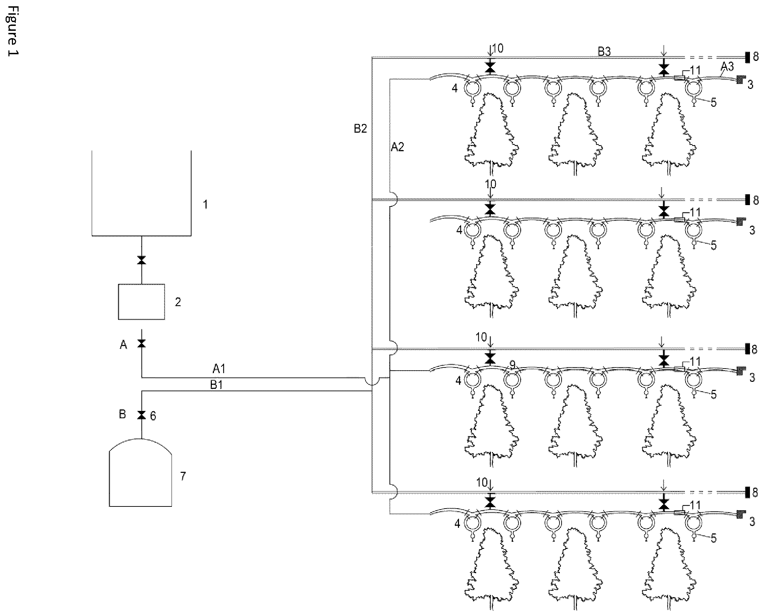

Figure 1 shows a solid-set sprinkler system, SSS, of the invention

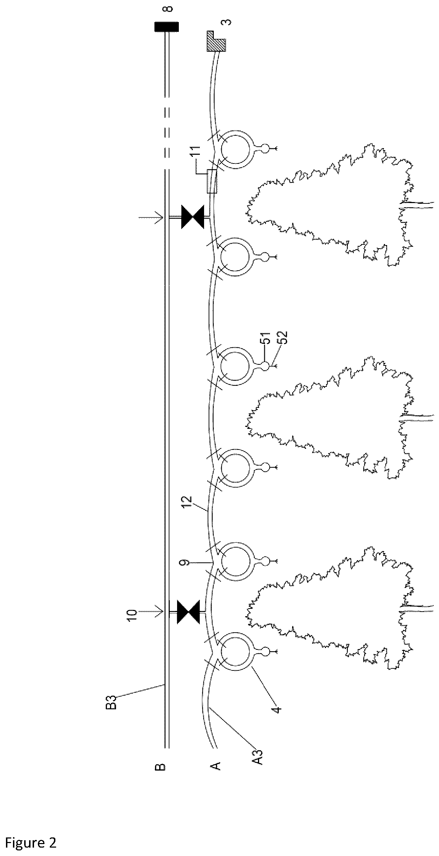

Fig. 2 shows a detail of the solid-set sprinkler system in a respective row of a permanent plantation

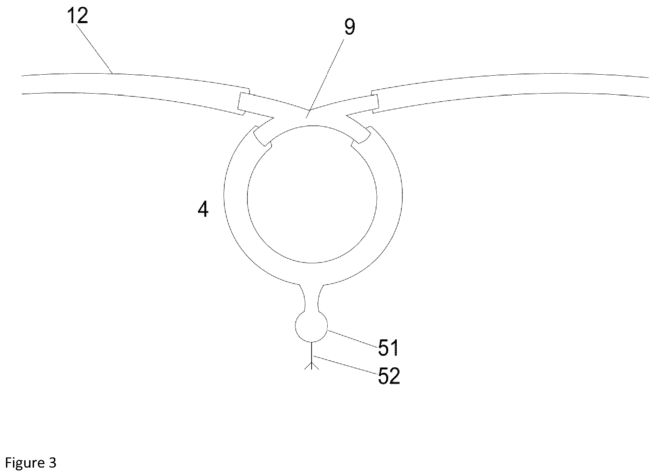

Figure 3 shows an embodiment of a storage tank of the solid-set sprinkler system

The solid-set sprinkler system of the invention consists of a fluid subsystem A and an air subsystem B. Each of the subsystems A, B has its own set of pipes. The fluid subsystem A is provided with pipes that comprise fluid lines A3, a connecting pipe A2 and a merging pipe A1, each of the fluid lines A3 extending along a respective row of a permanent plantation, and respective fluid lines A3 are connected to the merging pipe A1 via connecting pipe A2 at the beginning of rows of the permanent plantation. The air subsystem B is provided with pipes that comprise air lines B3, a connecting pipe B2 and a merging pipe B1, each of the air lines B3 extending along a respective row of a permanent plantation and runs in parallel with the corresponding fluid line A3, and respective air lines B3 are connected to the merging pipe B1 via connecting pipe B2 at the beginning of rows of the permanent plantation. The connecting pipes A2, B2 of a respective subsystem A, B extend transversally to the plant rows in the permanent plantation, for instance transversally to the rows of trees in an orchard. A respective subsystem A, B is respectively linked to its own tank: the fluid subsystem A is linked to a fluid mixing storage tank 1 via merging pipe A1 and a pump 2, the air subsystem B is linked to an air compressor 7 via merging pipe B1 and a stop valve 6.

In a respective row of plants in a permanent plantation, a fluid line A3 and an air line B3 extend in parallel from the beginning to the end of a respective row of plants. A respective fluid line A3 has an air vent 3 arranged at the end, so that the air may escape the fluid line A3 when fluid is filled into the fluid line A3. A respective air line B3 has a plug 8 at the end, preventing the air from escaping when the air line B3 is filled.

A respective fluid line A3 in a plantation row consists of a sequence of storage tanks 4 connected to each other by a pipe 12, the storage tanks 4 being spaced from each other by 0.3-2.0 m, preferably 0.5 m. The distance between respective storage tanks 4 is adapted to a respective plantation type such that at least one storage tank 4 is foreseen per one plant in the plantation. A respective storage tank 4 is adapted to be positioned in a fluid line A3 in a way that a free fluid flow is enabled along the fluid line A3 to a respective storage tank 4. A respective storage tank 4 is adapted to sprinkle the fluid on plants when the pressure in a respective storage tank 4 reaches at least 1.5 bar.

Each storage tank 4 preferably has a micro-sprinkler 5 arranged at its bottom end, said micro-sprinkler preferably consisting of an anti-drip valve 51 which continues into a nozzle 52 for dispensing fluid. The anti-drip valve 51 is configured in a way to allow the fluid flow when the pressure in a respective storage tank 4 reaches at least 1.5 bar.

In one embodiment, the storage tank 4 is configured as a pipe in the form of an interrupted loop having an inlet and an outlet opening for connection to a pipe 12, the tank being connected to the pipe 12 by an X shaped tubular element 9 and thus installed at the anticipated spot in the fluid line A3. The storage tank 4 is formed as a circular loop with a diameter of 0.2 m to 0.4 m, the inner diameter of the pipe is 10 mm to 15 mm, preferably 12 mm. The inner diameter of the pipe 12 connecting the storage tanks 4 in the fluid line A3 to each other is also 10 mm to 15 mm, preferably 12 mm. The number of storage tanks 4 installed in a respective fluid line A3 and the inner diameter of the pipe which constitutes the storage tank 4 and the pipe 12 regulate the needed fluid dosage per plant or per individual distance in a plant row. Said configuration of the storage tank 4 and connection to the pipe 12 enable a simple replacement of a storage tank 4 in a fluid line A3, if need may be.

The pipes are preferably polyethylene pipes.

A fluid line A3 and an air line B3 in a respective plantation row are connected to each other by one-way valves 10 arranged at intervals of about ten metres. In this way, the pressurized air in the air line B3 is enabled to propel the fluid in the fluid line A3 through the micro-sprinkler 5 to a plant.

A respective fluid line A3 is optionally provided with a reducing valve 11 which disables too high fluid pressure in the lower positions of a permanent plantation, if the plantation is located on a mountainous terrain, thus disabling an automatic increase in the pressure in the storage tanks 4 in the lower parts of plantation rows, or rather prevents automatic emission of the fluid from the storage tanks 4.

The fluid subsystem A is adapted to deliver a respective selected fluid to a respective plant in the permanent plantation, the air subsystem B is adapted to propel the fluid from the fluid subsystem A. The configuration of a respective fluid line A3 having a sequence of storage tanks 4 enables a uniform application of spraying agents or a pre-determined amount of fluid to a respective plant along a spraying line, the drift of the spraying agent or fluid off the plantation is substantially limited as well.

The fluid delivered to the plants in plantations can be plant protection agents and plant growth regulators - growth hormones (both pesticides), then foliar fertilizers and water.

Water delivery has several functions: the delivered water flushes the system after each use of a pesticide, in addition, by emitting water droplets through the micro-sprinklers 5, protection against spring time frosts may be provided in that glaze ice is formed around blossoms or, using evaporative cooling with water, tree blossoming in a plantation in pre-spring time is delayed, in summer time, fruit burns are prevented.

The overhead cable of a support or anti-hail fittings in a permanent plantation can be used to install the fluid lines A3 and the air lines B3 along rows of a permanent plantation.

### Operation mode

In phase one, the fluid pump 2 draws a spraying agent/pesticide from the mixing storage tank 1 and propels it at low pressure along the merging A1 and connecting pipe A2 to a respective fluid line A3 in each row of a plantation. The storage tanks 4 from the first one to the last storage tank 4 in a row of a plantation are filled. An air vent 3 is arranged at the end of a respective fluid line A3, when the last storage tank 4 is filled up, the fluid closes the air vent 3 and the flow of the spraying agent stops - the fluid subsystem A is filled with the fluid (pesticide or foliar fertilizer).

The pump 2 turns off.

A respective fluid line A3 in a plantation row consists of a sequence of storage tanks 4 spaced from each other by 0.3-2.0 m, preferably 0.5 m. A respective storage tank 4 is connected with an inlet and an outlet opening via an X shaped tubular element 9 connected to the pipe 12 and thus installed at the anticipated spot in the fluid line A3. At the bottom end of each storage tank 4 there is a micro-sprinkler 5 consisting of an anti-drip valve 51 which continues into a nozzle 52 for dispensing fluid. The anti-drip valve 51 opens the fluid flow when the pressure in the storage tank 4 reaches at least 1.5 bar. A respective fluid line A3 is provided with a reducing valve 11 which disables too high fluid pressure in the lower positions of a plantation located on a mountainous terrain, thus disabling an automatic increase in the pressure in the storage tanks 4, or rather prevents automatic emission of the fluid from the storage tanks 4.

In phase two, the air compressor 7 is used to produce air pressure of more than 3 bar in the air lines B3 of the air subsystem B. As each air line B3 is connected through one-way stop valves 10 to the fluid lines A3, the air pressure propels the fluid from the storage tanks 4 through the micro-sprinklers 5, when the pressure in the storage tank 4 reaches at least 1.5 bar. The connecting one-way stop valves 10 between a respective air line B3 and fluid line A3 are arranged in intervals of about ten metres and allow the flow in one direction only, i.e. from the air lines B3 to the fluid lines A3. The air pressure approximately synchronously evacuates the storage tanks 4 in the fluid lines A3. As the storage tanks 4 are spatially separated, the fluid (pesticide or fertilizer) from the fluid lines A3 cannot be deposited predominantly in only one part of the plantation row but is used up (evacuated) in all respective storage tanks 4 regardless of the position of a respective storage tank 4 in the fluid line A3 next to each tree in the plantation. Each tree along the entire plantation row is associated with one to three storage tanks 4 with micro-sprinklers 5. In this way, the trees located under a respective storage tank 4 get equal doses of the fluid (pesticide/fertilizer). The density and size of trees in a row of the orchard determine the number of corresponding storage tanks 4 per individual planting distance/tree. The number of storage tanks 4 in a plantation row and the diameter of the pipes constituting a respective storage tank 4 can be used to adjust the necessary amount of fluid (pesticide or fertilizer) to be sprinkled from the storage tanks 4. In this way, the amount of the spraying agent for a respective tree or for all trees on a certain surface area of the plantation is determined.

After the spraying agent has been expelled from the fluid subsystem A, the compressor 7 of the air subsystem B is turned off. The fluid subsystem A is ready to be cleaned with water, the method being the same as the one used for the application of fluids. The pump 2 draws clean water from the mixing storage tank 1 and fills the pipes of the fluid subsystem A. When all fluid lines A3 and storage tanks 4 are filled with water, the pump 2 of the fluid subsystem A is turned off, the air compressor 7 is turned on. The compressor blows the water from the pipes of the fluid subsystem A and from all storage tanks 4, simultaneously washing the micro-sprinklers 5 as well. The method for cleaning with water may be repeated, if necessary.

## Claims

1. A solid-set sprinkler system for permanent plantation protection, said system consisting of a fluid subsystem (A) and an air subsystem (B), each of the subsystems (A, B) being formed of its own set of pipes,
the fluid subsystem (A) being provided with fluid lines (A3), a connecting pipe (A2) and a merging pipe (A1), each of the fluid lines (A3) extending along a respective row of a permanent plantation,
the air subsystem (B) being provided with air lines (B3), a connecting pipe (B2) and a merging pipe (B1), each of the air lines (B3) extending along a respective row of a permanent plantation and running in parallel with the corresponding fluid line (A3),
the fluid subsystem (A) being linked to a fluid mixing storage tank (1) via merging pipe (A1) and a pump (2), and the air subsystem (B) being linked to an air compressor (7) via merging pipe (B1) and a stop valve (6),
a respective fluid line (A3) having an air vent (3) arranged at the end, so that the air may escape the fluid line (A3) when fluid is filled into the fluid line (A3), and a respective air line (B3) having a plug (8) at the end, preventing the air from escaping when the air line (B3) is filled,
the fluid line (A3) and the air line (B3) in a respective plantation row being connected to each other by one-way valves (10) which enable the pressurized air in the air line (B3) to propel the fluid in the fluid line (A3) to plants,
a respective fluid line (A3) in a plantation row consisting of a sequence of storage tanks (4) connected to each other by a pipe (12), and a respective storage tank (4) having a micro-sprinkler (5) at the bottom end, a respective storage tank (4) being adapted to be positioned in a fluid line (A3) in a way that a free fluid flow is enabled along the fluid line (A3) to a respective storage tank (4) to sprinkle the fluid to plants, when the pressure in a respective storage tank (4) reaches at least 1.5 bar.

2. The solid-set sprinkler system according to claim 1, wherein the distance between respective storage tanks (4) in a respective fluid line (A3) is adapted to a respective plantation type such that at least one storage tank (4) is foreseen per one plant in the plantation.

3. The solid-set sprinkler system according to claim 1 and 2, wherein the storage tanks (4) in a respective fluid line (A3) are spaced from each other by 0.3-2.0 m, preferably 0.5 m.

4. The solid-set sprinkler system according to claims 1 to 3, wherein the one-way valves (10) are arranged in intervals of about ten metres.

5. The solid-set sprinkler system according to claims 1 to 4, wherein the micro-sprinkler (5) consists of an anti-drip valve (51) that continues to a nozzle (52) to discharge the fluid, the anti-drip valve (51) being configured in a way to allow the fluid flow through the nozzle (52) when the pressure in a respective storage tank 4 reaches at least 1.5 bar.

6. The solid-set sprinkler system according to claims 1 to 5, wherein the storage tank (4) is configured as a pipe in the form of an interrupted loop having an inlet and an outlet opening, and is connected to the pipe (12) by an X shaped tubular element (9) and installed at the anticipated spot in the fluid line (A3).

7. The solid-set sprinkler system according to claim 6, wherein the loop diameter is 0.2 m to 0.4 m, the inner diameter of the loop-shaped pipe is 10 mm to 15 mm, preferably 12 mm.

8. The solid-set sprinkler system according to claims 1 to 7, wherein the inner diameter of the pipe (12) connecting the storage tanks (4) in the fluid line (A3) to each other is 10 mm to 15 mm, preferably 12 mm.

9. The solid-set sprinkler system according to claims 1 to 8, wherein a respective fluid line (A3) is optionally provided with a reducing valve (11) which disables too high fluid pressure in the lower positions of a permanent plantation, if the plantation is located on a mountainous terrain, thus disabling an automatic increase in the pressure in the storage tanks (4) in the lower parts of plantation rows and preventing automatic emission of the fluid from the storage tanks (4).

10. The solid-set sprinkler system according to claims 1 to 9, wherein the pipes are polyethylene pipes.

11. The solid-set sprinkler system according to claims 1 to 10, wherein the fluid is selected from the plant protection agents, plant growth regulators, foliar fertilizers, and water.

12. Operating method of the solid-set sprinkler system according to claims 1 to 11, wherein the method includes at least the following steps:
- filling the fluid subsystem (A) with fluid, wherein the fluid pump (2) propels the fluid from the mixing storage tank (1) along the merging (A1) and connecting pipe (A2) to a respective fluid line (A3) in each row of a plantation, so that all storage tanks (4) get filled; when the last storage tank (4) is filled up, the fluid closes the air vent (3) arranged at the end of each fluid line (A3), the fluid flow is stopped, the pump (2) is turned off;
- filling the air subsystem (B) with air, wherein the air compressor (7) is used to produce air pressure of more than 3 bar in the air lines (B3),
- propelling the fluid from the storage tanks (4) through the micro-sprinkler (5) to the plants, until the storage tanks (4) are empty, the air pressure from the air lines (B3) connected through one-way stop valves (10) to the fluid lines (A3) propelling the fluid from the storage tanks (4) through the micro-sprinklers (5), when the pressure in a respective storage tank (4) reaches at least 1.5 bar.

13. The method according to claim 12, the method further including a step of cleaning the fluid subsystem (A) with water, wherein the pump (2) propels clean water from the mixing storage tank (1) and fills the pipes of the fluid subsystem (A); when all fluid lines (A3) and storage tanks (4) are filled with water, the pump (2) of the fluid subsystem (A) is turned off and the air compressor (7) is turned on, which creates an air pressure higher than 3 bar in the air lines (B3), wherein the water from the pipes of the fluid subsystem (A) and from all storage tanks (4) is evacuated, simultaneously washing the micro-sprinklers (5) as well.

14. Use of a solid-set sprinkler system according to claims 1 to 11 for the protection of permanent plantations against diseases and pests, for the protection against spring time frost of blossoms, for the protection against summer burns of fruit, and for foliar fertilization of permanent plantations.
